(19) Europäisches Patentamt

European Patent Office

Office européen des brevets

(11) **EP 0 774 790 B1**

(12) **FASCICULE DE BREVET EUROPEEN**

(45) Date de publication et mention
de la délivrance du brevet:
**10.05.2000 Bulletin 2000/19**

(51) Int Cl.⁷: **H01L 41/04**, G04C 3/12

(21) Numéro de dépôt: **96117811.8**

(22) Date de dépôt: **07.11.1996**

(54) **Procédé et circuit d'excitation et de contrôle d'un moteur piézo-électrique en mode pas à pas**

Verfahren und Kontroll- und Antriebschaltung für einen piezoelektrischen Schrittmotor

Method and circuit for driving and controlling a piezoelectric step motor

(84) Etats contractants désignés:
**CH DE GB LI**

(30) Priorité: **16.11.1995 FR 9513607**

(43) Date de publication de la demande:
**21.05.1997 Bulletin 1997/21**

(73) Titulaire: **ASULAB S.A.**
**CH-2501 Bienne (CH)**

(72) Inventeurs:
• **Luthier, Roland**
**1138 Villars-sous-Yens (CH)**
• **Wiget, Fridolin**
**2000 Neuchâtel (CH)**

(74) Mandataire: **Barbeaux, Bernard et al**
**ICB**
**Ingénieurs Conseils en Brevets SA**
**Rue des Sors 7**
**2074 Marin (CH)**

(56) Documents cités:
**US-A- 5 198 732**

## Description

La présente invention concerne un procédé et un circuit d'excitation et de contrôle d'un moteur piézo-électrique. Plus particulièrement, cette invention concerne un procédé et un circuit d'excitation et de contrôle d'un moteur piézo-électrique en mode pas-à-pas afin de stabiliser la fréquence d'excitation en résonance du moteur. Un tel moteur peut être utilisé par exemple dans une pièce d'horlogerie.

Généralement, un moteur piézo-électrique comprend un rotor monté à rotation sur un stator formant une structure porteuse assurant le support axial et le guidage en rotation du rotor, voir par exemple le document EP-A-0 580 049. Le moteur piézo-électrique fonctionne à la fréquence de résonance $f_R$ du stator. Un circuit d'excitation applique une fréquence d'excitation $f_E$ égale à la fréquence de résonance au stator. Toutefois, ces fréquences évoluent avec les conditions ambiantes telles que la température et avec le vieillissement, c'est-à-dire l'usure du moteur, mais elles n'évoluent pas d'une même façon. En effet, l'effet de la température sur le circuit, et donc sur la fréquence d'excitation, est plus grand que l'effet sur le stator, et donc sur la fréquence de résonance. Si la variation entre ces deux fréquences devient trop importante, le fonctionnement du moteur va se détériorer jusqu'à l'arrêt du moteur. C'est pourquoi il faut contrôler la fréquence d'excitation $f_E$ du signal alternatif appliqué au moteur afin d'assurer que cette fréquence d'excitation $f_E$ reste égale à la fréquence de résonance $f_R$ du moteur.

On connaît des systèmes de contrôle de la fréquence de résonance d'un moteur qui utilisent un circuit d'asservissement pour stabiliser continuellement la fréquence d'excitation. Il s'agit en général d'un système de verrouillage en phase PLL (pour Phase Locked Loop, le terme anglais utilisé couramment dans le domaine) pour maintenir constant le déphasage entre la tension et le courant qui sont appliqués au moteur. Ces systèmes de contrôle nécessitent un comparateur de phase et un oscillateur commandé en tension. Toutefois, on comprend qu'avec ces composants, un tel circuit de contrôle devient complexe et coûteux.

Une autre solution est connue du document EP-A-0 366 496 qui décrit un circuit de contrôle d'un moteur piézo-électrique, ledit circuit comprenant un comparateur de tension, au lieu d'un comparateur de phase, et un oscillateur commandé en tension. Toutefois, ici aussi le circuit est, à cause des composants utilisés, coûteux et complexe. De plus, les systèmes de l'art antérieur utilisent des grandeurs analogiques pour contrôler la fréquence d'excitation, ce qui les rend plus délicats.

En effet, les circuits de contrôle ainsi que les procédés de l'art antérieur mentionné sont complexes parce qu'ils doivent régler très précisément et en continu la fréquence d'excitation pour assurer que cette dernière reste identique à la fréquence de résonance nécessaire pour faire tourner le moteur. Pour l'application prévue de cette invention, c'est-à-dire dans laquelle le moteur tourne en mode pas-à-pas, les circuits de l'art antérieur sont en fait trop sophistiqués et donc trop coûteux. En effet, étant donné qu'un moteur en mode pas-à-pas ne tourne pas continuellement, il n'est pas nécessaire de régler sa fréquence d'excitation continuellement.

Un but de la présente invention est d'apporter une solution aux problèmes mentionnés de l'art antérieur en présentant un procédé et un circuit d'excitation et de contrôle de la fréquence d'excitation pour régler cette dernière autour de la fréquence de résonance, le procédé étant simple et efficace, et le circuit étant peu coûteux et facile à réaliser.

Ce but est atteint grâce aux caractéristiques particulières que présentent le procédé d'excitation et de contrôle de la revendication 1 et également le circuit d'excitation et de contrôle de la revendication 7.

Avantageusement, le procédé et le circuit selon l'invention permettent une stabilisation de la fréquence d'excitation au moyen de signaux numériques. De plus, le procédé et le circuit selon l'invention permettent de bénéficier de la construction intrinsèquement simple du moteur pas à pas lui-même.

En effet, le procédé et le circuit selon l'invention sont utilisés pour contrôler un moteur qui ne tourne pas continuellement, mais qui tourne, de préférence, un pas ou de quelques pas à la fois et qui attend donc une commande externe avant d'effectuer le prochain pas, ce pas pouvant être un tour entier ou une fraction de tour. Par exemple, si ce moteur est utilisé dans une pièce d'horlogerie électronique pour entraîner l'aiguille des secondes, l'oscillateur est commandé par le circuit horloger, et le moteur tourne d'un pas chaque seconde. Le moteur tourne correctement à sa fréquence de résonance $f_R$. Chaque fois que le moteur fait un pas, la durée t pour effectuer ce pas est mesurée. Pour que le moteur fonctionne correctement, une durée $t_o$ correspondant à une durée limite est déterminée et indique la limite du fonctionnement correct. La durée t mesurée est comparée à cette valeur limite $t_o$. Si la durée t dépasse la durée $t_o$, on sait que la fréquence d'excitation $f_E$ ne correspond plus à la fréquence de résonance $f_R$ et qu'on doit la régler. Comme l'influence ambiante telle que la température ne change que lentement la fréquence de résonance $f_R$ du moteur, il suffit de chercher une nouvelle fréquence d'excitation $f_E$ voisine de l'ancienne pour ensuite mesurer si le moteur tourne dans la durée limite $t_o$ à cette nouvelle fréquence. Ainsi, par une convergence lente de la fréquence $f_E$ vers la fréquence de résonance $F_R$, on arrive à contrôler la fréquence de l'oscillateur du moteur suffisamment précisément pour que le moteur fonctionne correctement.

On va décrire ci-après, à titre d'exemple uniquement, un mode de réalisation de l'objet de l'invention en se référant aux dessins annexés, dans lesquels :

- la figure 1 représente schématiquement un moteur piézo-électrique et ses moyens de commande pouvant être contrôlés par le procédé et par le circuit de contrôle selon l'invention,
- la figure 2 montre schématiquement la vitesse de rotation du moteur par rapport à la fréquence appliquée au moteur,
- la figure 3 est un organigramme montrant schématiquement les diverses étapes de la phase d'initialisation par le procédé et le circuit selon l'invention,
- la figure 4 est un organigramme montrant schématiquement les diverses étapes de la phase de contrôle du procédé et du circuit selon l'invention, et
- la figure 5 représente schématiquement un exemple du circuit d'excitation et de contrôle selon l'invention.

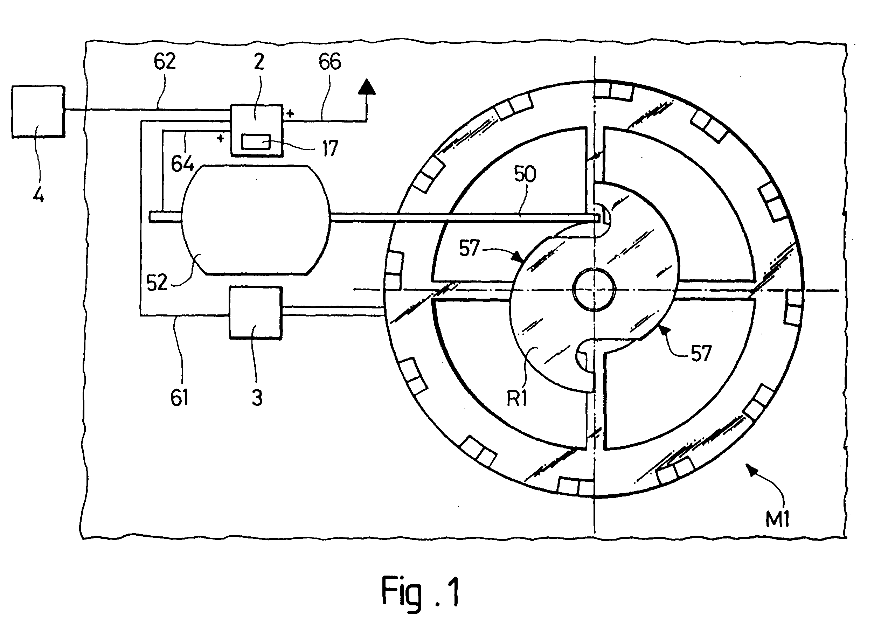

La figure 1 représente schématiquement un moteur piézo-électrique et ses moyens de commande, moteur qui peut être excité et contrôlé par le circuit d'excitation et de contrôle selon l'invention.

Le moteur piézo-électrique M1 comprend un rotor R1 monté à rotation sur un stator S1 (non-représenté à la figure 1) formant une structure porteuse assurant le support axial et le guidage en rotation du rotor. Le moteur piézo-électrique M1 fonctionne à la fréquence de résonance $f_R$ du stator, qui est ainsi excité en résonance correspondant à un mouvement vibratoire symétrique par rapport à l'axe du disque du stator S1. Un circuit de commande 2 du moteur délivre un signal alternatif de fréquence correspondant à la fréquence d'excitation $f_E$ désirée. A cet effet, le circuit de commande 2 comprend un oscillateur programmable 17 agencé pour fournir la fréquence $f_E$ souhaitée. Il s'agit ici d'un oscillateur RC couplé à un quartz fournissant la fréquence de référence. Cet oscillateur 17 est commutable, c'est-à-dire qu'il peut être enclenché et arrêté par le circuit de commande 2. La sortie de l'oscillateur 17 attaque directement, ou à travers une ligne électrique 61 et un étage de puissance 3, les éléments piézo-électriques du moteur pour faire vibrer le stator S1 et pour faire entraîner le rotor R1 en rotation.

Des moyens de positionnement angulaire (50, 57) sont prévus permettant d'arrêter le mouvement rotatif du rotor R1, par exemple dans deux positions angulaires prédéterminées, décalées à 180° l'une de l'autre. Une telle construction a été décrite plus en détail dans le document EP-A-0 587 031 auquel le lecteur pourra se référer pour plus de détails.

En effet, les moyens de positionnement comportent dans cet exemple une lame élastique de contact 50 qui est montée sur un support 52 et disposée dans le plan de rotation du rotor R1 et qui est conformée pour venir en contact latéral sur le pourtour extérieur 57 de celui-ci, au moins lors d'une partie de sa rotation. Le pourtour 57 du rotor R1 présente un profil de came à cet effet, comme cela est expliqué plus en détail dans le document EP-A-0 587 031 déjà cité. La lame 50, qui est réalisée en un matériau électriquement conducteur, forme avec le rotor R1 un interrupteur électromécanique qui est associé au circuit de commande 2 via une ligne électrique 64. Une seconde ligne électrique 66 relie le circuit 2 à la masse, comme cela a été expliqué dans le document EP-A-0 587 031 cité ci-dessus. Un pas du moteur est défini ici par la fin du pas, donc au moment de la réouverture du contact. Il est encore à noter que le circuit de commande 2 est relié à un circuit horloger 4 lui fournissant des impulsions à une certaine fréquence par une ligne 62.

Pour assurer un bon fonctionnement du moteur, il est donc nécessaire que ce moteur soit excité au voisinage de sa fréquence de résonance $f_R$. Comme la fréquence $f_R$ varie sous l'influence des effets thermiques et à cause de vieillissement du moteur, il est nécessaire de contrôler la fréquence d'excitation $f_E$ produite par l'oscillateur 17.

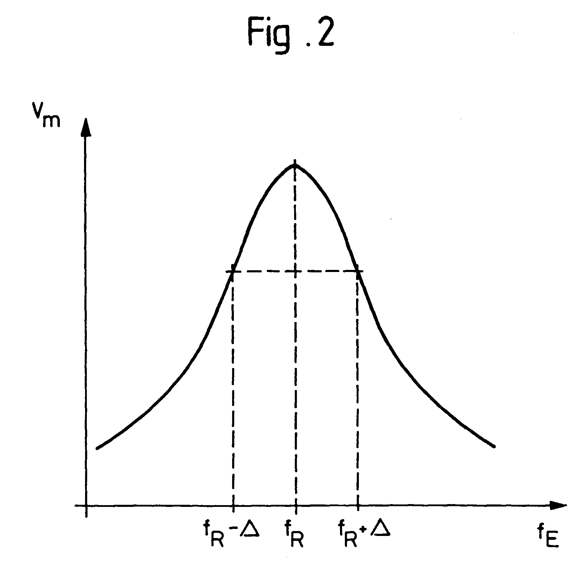

La figure 2 montre la vitesse de rotation $V_m$ du moteur par rapport à la fréquence d'excitation $f_E$ appliquée au moteur. La fréquence optimale, qui donne une rotation rapide, se situe à la fréquence de résonance $f_R$ du moteur.

A cet effet, le circuit de commande 2 mesure d'abord la durée d'un pas du moteur à la fréquence $f_E$ à l'aide de l'interrupteur électromécanique lame/rotor 50, R1 mentionné ci-dessus. En effet, pour que le moteur tourne correctement à la fréquence $f_R$, chaque fois que le moteur fait un pas, la durée $t_i$ pour faire ce pas doit rester dans une durée limite $t_o$ prédéterminée qui est encore considérée comme acceptable. Si la durée $t_i$ mesurée dépasse la durée $t_o$, on sait que la fréquence d'excitation $f_E$ appliquée par l'oscillateur 17 au moteur ne correspond plus exactement à la fréquence $f_R$ et que cette fréquence $f_E$ doit donc être modifiée. Puisque l'influence ambiante, comme la température, ne change que lentement la fréquence de résonance $f_R$ du moteur, et donc la vitesse de rotation du moteur, il suffit de chercher une nouvelle fréquence d'excitation $f_E$ voisine de l'ancienne, par exemple $f_E+\Delta f$, pour ensuite mesurer la nouvelle durée $t_{i+1}$ d'un pas effectué par le moteur à cette nouvelle fréquence $f_E+\Delta f$. Si la durée $t_{i+1}$ dépasse toujours la durée limite $t_o$, une nouvelle fréquence d'excitation $f_E$ est cherchée dans l'autre sens, c'est-à-dire $f_E-\Delta f$. Ainsi, par une convergence lente, on arrive à régler la fréquence $f_E$ appliquée par l'oscillateur 17 au moteur d'une manière suffisamment précise que le moteur fonctionne correctement et tourne alors dans la durée limite $t_o$.

La tolérance du fonctionnement du moteur définit une plage de fréquences, allant de $f_R-\Delta$ à $f_R+\Delta$ (voir la figure 2). Si par exemple la fréquence de résonance $f_R$ imposée par la fabrication est 130 kHz, et la tolérance du moteur $\Delta$ est par exemple ±10 kHz, la plage dans laquelle le moteur peut encore fonctionner est donc 20 kHz, c'est-à-dire de 120 à 140 kHz. La fréquence de résonance du moteur détermine ensuite la plage de fréquences d'opération de l'oscillateur 17, Comme la fréquence du moteur varie légèrement, il faut déterminer une plage d'opération de l'oscillateur 17 autour de la plage de fréquence du moteur en tenant compte d'une certaine marge de sécurité due à la tolérance de fabrication du moteur. Cette plage d'opération de l'oscillateur 17, qui est donc plus large que la plage de fonctionnement $\Delta$ et qui a été trouvée expérimentalement, est choisie dans cet exemple entre 100 et 163,5 kHz. Ainsi, on peut définir la tolérance de l'oscillateur $\partial$ comme étant $\pm 31,75$ kHz.

Le procédé et le circuit d'excitation et de contrôle selon l'invention sont conçus d'une façon à d'abord chercher rapidement une fréquence d'excitation $f_E$ à laquelle le moteur peut fonctionner, c'est-à-dire à laquelle le moteur tourne dans la durée limite $t_o$, pour ensuite contrôler cette fréquence $f_E$ afin d'assurer un fonctionnement correct continuellement, en réglant la fréquence $f_E$ appliquée au moteur quand cela devient nécessaire, c'est-à-dire quand la fréquence $f_E$ s'éloigne trop de la fréquence de résonance $f_R$ du moteur indiquée par la durée mesurée t dépassant la durée limite $t_o$. Plus simplement dit, le procédé et le circuit selon l'invention cherchent à rester proche du sommet de la courbe représentée à la figure 2 en modifiant la fréquence d'excitation $f_E$, de préférence, itérativement. Avantageusement, le circuit d'excitation et de contrôle selon l'invention fait partie du circuit de commande 2.

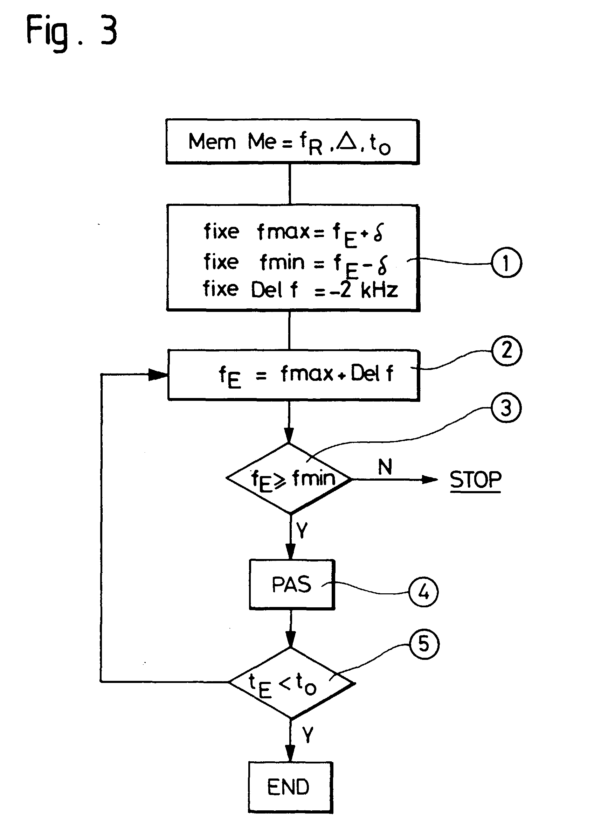

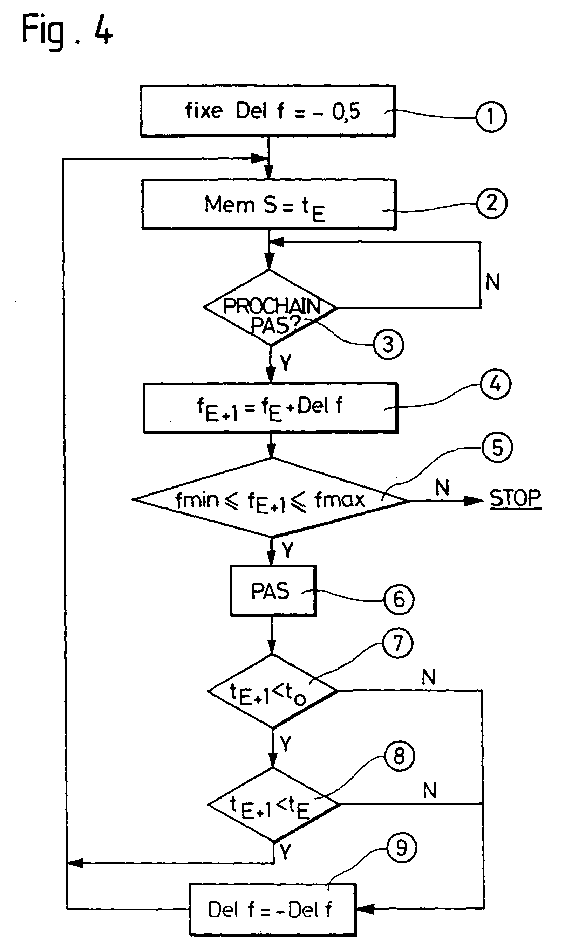

Le procédé et le fonctionnement du circuit seront expliqués ci-après à l'aide des organigrammes schématiques des figures 3 et 4.

La figure 3 est un organigramme montrant schématiquement la phase d'initialisation par le circuit selon l'invention. Premièrement, à l'étape 1, les paramètres d'initialisation sont lus d'une mémoire Me, qui peut être incorporée dans le circuit 2, vers le circuit de commande 2 commandant l'oscillateur 17 programmable. Comme cela a été expliqué ci-dessus, ces paramètres dépendent de la fabrication du moteur et comprennent donc la fréquence de résonance $f_R$ ainsi que la valeur de la tolérance $\Delta$.

Ensuite, une fréquence maximale fmax de l'oscillateur 17 peut être déterminée qui est égale à $f_E + \partial$, dans laquelle $\partial$ correspond à la plage d'opération de l'oscillateur 17, comme cela a été expliqué ci-dessus. La fréquence $f_E$ correspond à la fréquence nominale de résonance $f_R$ du moteur, donc à 130 kHz. De même, une fréquence minimale fmin peut être déterminée qui est égale à $f_E - \partial$. La fréquence fmax est fixée dans l'étape 1 à la figure 3.

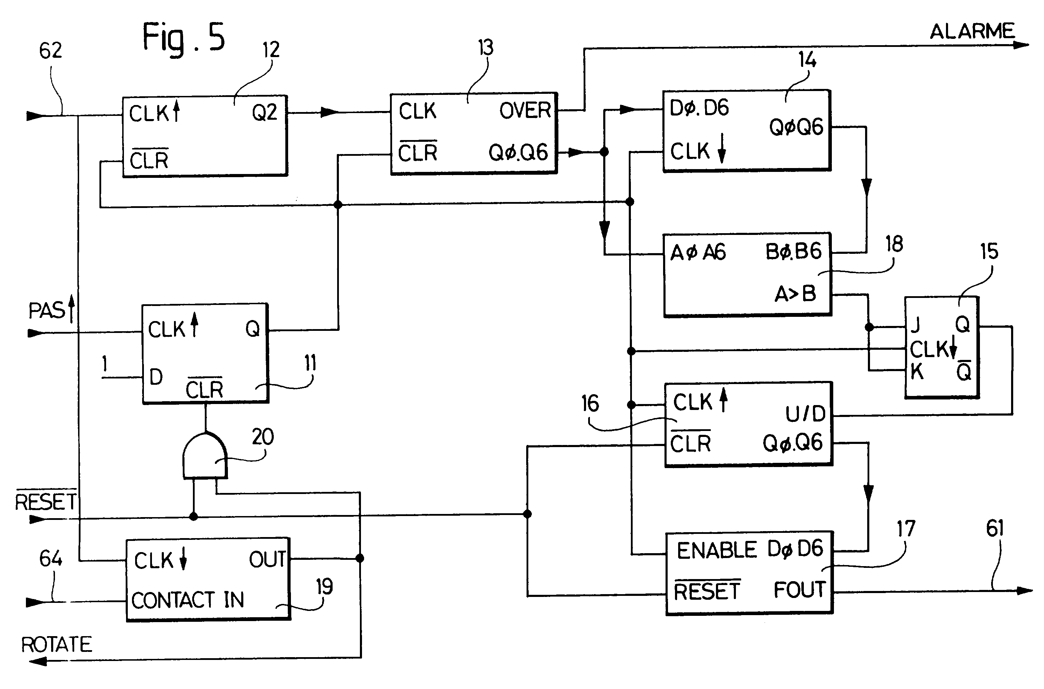

Des moyens de réglage (15, 16 voir la figure 5) de la fréquence de l'oscillateur 17 sont agencés pour fixer un paramètre de changement de fréquence au cas où le moteur ne tourne pas. Ce paramètre est référencé ici Delf et est choisi à l'avance, par exemple à -2 kHz. Ce paramètre définit la convergence initiale pour trouver une fréquence à laquelle le moteur peut fonctionner d'une manière suffisamment efficace.

L'organigramme montre aussi les étapes à exécuter par le procédé et le circuit selon l'invention pour faire fonctionner le moteur. Le signe N représente "non" et le signe Y représente "oui" en réponse à une étape de test.

A l'étape 2, l'oscillateur 17 est mis en marche à la fréquence $f_E = $ fmax + Delf, dans cet exemple $f_E = $ 163,5 - 2 = 161,5 kHz. Ensuite, à l'étape 3, cette fréquence $f_E$ est comparée à la fréquence fmin pour assurer qu'on ne sort pas de la plage de fonctionnement du moteur définie par sa fabrication. Si la fréquence $f_E$ est plus petite que fmin, le moteur est arrêté, ce qui est représenté par "STOP", et l'on sait que ce moteur ne fonctionne pas. Dans un tel cas, un signal d'alarme, représenté par "ALARME" à la figure 5, peut être donné pour indiquer que le moteur a un défaut.

Si la fréquence $f_E$ est égale ou supérieure à la fréquence fmin, une commande de faire tourner le moteur d'un pas est donnée, c'est-à-dire que l'oscillateur 17 est enclenché pour faire tourner le moteur, ce qui est représenté par l'étape 4 appelée "PAS" à la figure 3. La durée $t_E$ pour exécuter ce pas par le moteur est mesurée à l'étape 5. Si la durée $t_E$ est plus grande que la durée limite $t_o$, la prochaine fréquence $f_{E+1} = f_E + $ Delf est déterminée, à l'étape 2, et prescrite à l'oscillateur 17. Ensuite, les étapes 3 à 5 se répètent à la nouvelle fréquence. Si, par contre, la durée $t_E$ mesurée est égale ou inférieure à la durée limite $t_o$, on sait que le moteur fonctionne correctement. La phase d'initialisation est ainsi terminée, ce qui est indiquée par "END" à la figure 3. Cette phase d'initialisation est effectuée de préférence chaque fois que le circuit d'excitation et de contrôle est mis en service, par exemple quand il commence à recevoir une tension d'alimentation électrique.

Après cette phase d'initialisation, qui est en fait un réglage grossier de la fréquence d'excitation $f_E$ de l'oscillateur 17 pour faire tourner le moteur, la phase de contrôle est exécutée pour assurer un fonctionnement correct continuellement malgré l'influence ambiante qui change la fréquence de résonance $f_R$ du moteur, afin de corriger la fréquence d'excitation $f_E$ de l'oscillateur 17.

A la figure 4 on voit un organigramme qui montre schématiquement les étapes à exécuter par le procédé et le circuit selon l'invention pour faire ce réglage fin.

D'abord, à l'étape 1, le paramètre Delf est modifié de sorte qu'il est choisi plus petit, ici -0.5 kHz, pour obtenir un réglage plus fin de la fréquence. La durée $t_E$ du premier pas, mesurée pendant l'initialisation, est stockée dans une mémoire S à l'étape 2. La mémoire S peut être par exemple un registre à verrouillage, référencé 14 à la figure 5 comme cela sera décrit plus en détail ci-après. Comme il s'agit ici d'un moteur qui tourne d'un pas à la fois, l'oscillateur 17 attend donc une commande externe avant s'enclencher pour produire le prochain pas de rotation du moteur, voir l'étape 3. Dès que cette commande externe est reçue, la fréquence de l'oscillateur 17 est changée de sa fréquence initiale $f_E$ vers la nouvelle fréquence $f_{E+1} = f_E + $ Delf, voir l'étape 4. Ensuite, à l'étape 5, la nouvelle fréquence $f_{E+1}$ est comparée à la fréquence fmax et à la fréquence fmin pour vérifier qu'on ne sort pas de la plage de fonctionnement du moteur. Si on est sorti de la plage, donc si la condition à l'étape 5 n'est pas remplie - ce qu'est indiquée par la référence "N" -, on arrête la phase de contrôle, indiqué dans la figure 4 par le mot "STOP", afin de remettre l'oscillateur 17 à sa fréquence d'excitation $f_E$ pendant la phase d'initialisation décrite ci-dessus à l'aide de la figure 3. Si on est toujours dans la plage, l'oscillateur 17 est enclenché à cette nouvelle fréquence $f_{E+1}$, et le moteur est enclenché pour effectuer un pas, voir l'étape 6. La durée de ce pas est mesurée et cette durée $t_{E+1}$ est comparée à la durée limite $t_o$, à l'étape 7, pour être sûr que le moteur fonctionne correctement. Si la durée $t_{E+1}$ est plus grande que la durée limite $t_o$, on passe à l'étape 9 pour inverser la valeur du paramètre Delf pour chercher la nouvelle fréquence dans l'autre sens, en analogie avec le fonctionnement du circuit dans sa phase d'initialisation expliquée ci-dessus, et les étapes décrites ci-dessus se répètent, mais maintenant avec un changement de la fréquence d'excitation $f_{E+2}$ dans l'autre sens.

Par contre, si la durée $t_{E+1}$ est plus petite que $t_o$, on sait que le moteur a tourné correctement. Ensuite, à l'étape 8, on compare la durée $t_{E+1}$ à la durée mesurée précédemment $t_E$ pour évaluer si le moteur fonctionne plus efficacement à la nouvelle fréquence $f_{E+1}$. Ainsi, une optimalisation continue du fonctionnement du moteur par convergence vers la fréquence de résonance $F_R$ réel peut être réalisée par le procédé et par le circuit selon l'invention.

La figure 5 représente schématiquement un exemple d'un circuit d'excitation et de contrôle selon l'invention pour exécuter le réglage fin expliqué ci-dessus à l'aide de la figure 4.

Le circuit comprend une bascule 11 du type D qui reçoit à son entrée horloge, référencée CLK, un signal d'impulsions de commande "PAS" correspondant à l'étape 6 de la figure 4. Cette entrée réagit sur le flanc montant du signal "PAS". L'entrée D est toujours au niveau logique "1", c'est-à-dire haut. La sortie Q de la bascule D 11 est connectée aux entrées $\overline{CLR}$ d'une diviseur 12, et d'un compteur 13 à sept bits. Cette sortie Q est en outre connectée aux entrées horloges, référencées CLK, d'un registre à verrouillage 14, qui réagit sur le flanc descendant, d'une bascule JK 15, qui réagit aussi sur le flanc descendant, d'un compteur-décompteur 16, qui réagit sur le flanc montant, et encore à l'entrée de validation, référencée "ENABLE", de l'oscillateur programmable 17. Comme cela a déjà été mentionné, la bascule 15 et le compteur-décompteur 16 forment ensemble les moyens de réglage de la fréquence d'excitation $f_E$ de l'oscillateur 17.

Le compteur 13 va mesurer et comparer la durée $t_E$ du pas à effectuer à la valeur limite $t_0$. Le registre 14 correspond donc à la mémoire S décrite à l'étape 2 de la figure 4. La nouvelle valeur du compteur 13 qui correspond à la durée $t_{E+1}$ devient alors l'ancienne valeur $t_E$, voir l'étape 3 de la figure 4. La diviseur 12 reçoit ses impulsions du circuit horloger 4, via une ligne électrique 62 (voir la figure 1), à l'entrée horloge CLK avec une fréquence de 1024 Hz. La diviseur 12 fonctionne comme un diviseur par $2^3$ et donne à sa sortie Q2 un signal d'impulsions à 128 Hz. Cette sortie est connectée à l'entrée horloge CLK du compteur 13.

Le compteur 13 a une première sortie "OVER" qui donne un signal d'alarme, référencé "ALARME" et correspondant à la commande "STOP" de l'étape 3 de la figure 3, quand le compteur déborde, c'est-à-dire si la durée $t_E$ pour faire un pas a dépassé la durée limite prédéterminée $t_0$. L'autre sortie, référencée Q0-Q6, du compteur 13, qui correspond à la valeur en sept bits du compteur et donc à la durée d'un pas, est connectée à l'entrée D0-D6 du registre à verrouillage 14, et également à l'entrée A0-A6 d'un comparateur 18. La sortie Q0-Q6 du registre 14 est connectée à une deuxième entrée, référencée B0-B6, du comparateur 18. La sortie A>B du comparateur 18 donne le résultat de la comparaison entre les valeurs à sept bits fournies par le compteur 13 et par le registre 14, correspondant à l'étape 8 de la figure 4. Cette sortie est reliée aux entrées J et K de la bascule JK 15. La sortie Q de la bascule JK 15 est connectée à l'entrée U/D du compteur-décompteur 16. La valeur du compteur sera donc incrémentée ou décrémentée en conséquence. La sortie Q0-Q6 du compteur-décompteur, qui correspond donc à la valeur à sept bits, est reliée directement à l'entrée D0-D6 de l'oscillateur 17: La sortie Fout de l'oscillateur 17 possède la fréquence $f_E$ appliquée par l'oscillateur programmable au moteur. Ainsi, l'oscillateur 17 peut délivrer une fréquence réglable.

La bascule du type D 11 a encore une entrée $\overline{CLR}$ qui reçoit un signal de sortie d'une porte "ET" 20 à deux entrées. Une première entrée de la porte 20 reçoit un signal de remise à zéro, référencé $\overline{RESET}$, commandé par un contrôleur externe. Le signal de remise à zéro $\overline{RESET}$ peut également être fourni aux entrées de remise à zéro du compteur-décompteur 16 et de l'oscillateur 17. La deuxième entrée de la porte 20 est connectée à la sortie "OUT" d'un circuit anti-rebond 19. Le circuit anti-rebond 19 reçoit également à son entrée horloge, référencée CLK, le signal horloge à 1024 Hz qui réagit par son flanc descendant. Ce circuit anti-rebond 19 réagit sur le contact fait par le moteur piézo-électrique quand celui-ci a effectué un pas. L'impulsion de contact provient des moyens de positionnement angulaire (50, 57) par la ligne électrique 64, comme cela a été expliqué ci-dessus à l'aide de la figure 1. La sortie "OUT" du circuit anti-rebond 19 émet une brève impulsion négative à l'ouverture du contact de détection de la rotation du moteur. Cette impulsion interrompt la rotation du moteur par un signal de commande, référencé "ROTATE".

En bref, on peut dire qu'après une remise à zéro, "RESET", par le contrôleur externe, le moteur est enclenché pour effectuer un pas. L'impulsion "PAS" va libérer la diviseur 12 ainsi que le compteur 13. La bascule JK 15 va incrémenter ou décrémenter le compteur-décompteur 16 selon le résultat de la comparaison effectuée par le comparateur 16. Par conséquent, la fréquence de l'oscillateur 17 est déterminée, et ce dernier est activé pour faire tourner le moteur en donnant une impulsion par la ligne électrique 61 (voir également la figure 1).

Grâce au procédé et au circuit d'excitation et de contrôle qui viennent d'être décrits, la fréquence $f_E$ de l'oscillateur 17 est optimalisée itérativement en restant proche de la fréquence de résonance $f_R$ du moteur, de sorte que le fonctionnement du moteur est très efficace. Bien qu'un mode préféré de réalisation du procédé et du circuit d'excitation et de contrôle selon l'invention soit décrit ci-dessus, l'invention n'est pas limitée à ce mode de réalisation spécifique, lequel est donné uniquement à titre d'exemple non-limitatif de l'invention.

## Revendications

1. Procédé d'excitation et de contrôle d'un moteur piézo-électrique (M1) en mode pas-à-pas, le moteur ayant une fréquence de résonance ($f_R$) et étant alimenté électriquement à une fréquence d'excitation ($f_E$) durant chaque pas de fonctionnement, le procédé étant caractérisé en ce qu'il comporte une phase de contrôle qui s'étend au moins sur plusieurs pas successifs dudit moteur et dans laquelle, pour un pas courant dudit moteur, on utilise une valeur déterminée de la fréquence d'excitation ($f_{E+1}$), on mesure la durée ($t_{E+1}$) du pas courant, on compare ladite durée ($t_{E+1}$) à la durée ($t_E$) du pas précédent et, selon le résultat de cette comparaison, on corrige ladite valeur de la fréquence d'excitation ($f_{E+2}$) pour le pas suivant dans un sens tendant à réduire la durée du pas.

2. Procédé selon la revendication 1, caractérisé en ce que ladite correction consiste à ajouter à ladite valeur de la fréquence d'excitation ($f_{E+1}$) un incrément (Delf) prédéterminé et susceptible d'être positif ou négatif.

3. Procédé selon la revendication 2, caractérisé par le fait que si la comparaison indique que la durée du pas courant ($t_{E+1}$) est supérieure à celle du pas précédent ($t_E$), on change le signe de l'incrément (Delf).

4. Procédé selon la revendication 2, caractérisé en ce qu'on donne une valeur négative audit incrément si, pour un pas initial de la phase de contrôle, ladite valeur déterminée de la fréquence d'excitation ($f_{E+1}$) est supérieure à la fréquence de résonance ($f_R$).

5. Procédé selon l'une quelconque des revendications précédentes, caractérisé en ce qu'il comporte, avant la phase de contrôle, une phase d'initialisation qui s'étend sur plusieurs pas successifs du moteur et dans laquelle on définit la valeur déterminée de la fréquence d'excitation à utiliser au début de la phase de contrôle.

6. Procédé selon la revendication 5, caractérisé en ce que dans la phase d'initialisation, on considère une plage de fréquences d'excitation entre deux valeurs limites, (fmin, fmax), on utilise une première des valeurs limites de la fréquence d'excitation ($f_E$) pour produire un premier pas du moteur, on mesure la durée de ce pas ($t_E$) et, si elle est inférieure à une durée limite maximale ($t_0$) on passe à la phase de contrôle, sinon on corrige la fréquence d'excitation ($f_E$) en direction de l'autre valeur limite et l'on utilise la fréquence d'excitation ainsi corrigée ($f_{E+i}$) pour produire un second pas du moteur, et ainsi de suite jusqu'à ce que la durée du pas ($t_{E+i}$) soit inférieure à ladite durée limite maximale ($t_0$).

7. Circuit d'excitation et de contrôle d'un moteur piézoélectrique (M1) en mode pas-à-pas convenant à la mise en oeuvre du procédé selon l'une quelconque de revendications précédentes, caractérisé en ce que ledit circuit comprend :

   - un oscillateur programmable (17) agencé pour délivrer un signal à fréquence réglable ($f_E$) à un circuit d'alimentation (3) du moteur (M1),
   - des moyens (13, 14) pour mesurer et de mémoriser la durée ($t_{E+1}$) d'un pas du moteur,
   - des moyens (18) pour comparer ladite durée ($t_{E+1}$) à la durée ($t_E$) d'un pas précédent et/ou à une durée limite prédéterminée ($t_0$), et
   - des moyens de réglage (15, 16) agissant sur l'oscillateur programmable (17) en réponse auxdits moyens pour comparer (18), pour modifier ledit signal à fréquence réglable ($f_E$).

8. Circuit selon la revendication 7, caractérisé en ce que lesdits moyens de réglage (15, 16) sont agencés pour modifier par incrémentation ledit signal à fréquence réglable ($f_E$).

9. Circuit selon la revendication 7 ou 8, caractérisé en ce que lesdits moyens (13, 14) pour mesurer et mémoriser comprennent un compteur (13) associé à un registre à verrouillage (14).

10. Circuit selon l'une quelconque des revendications 7, 8 ou 9, caractérisé en ce que le circuit comprend en outre des moyens (11) pour commander l'opération desdits moyens (13, 14) pour mesurer et mémoriser suite à la réception d'une impulsion engendrée par des moyens de détection (50, 57) du moteur quand ce dernier a effectué un pas.

**Patentansprüche**

1. Verfahren zum Anregen und Steuern eines piezoelektrischen Schrittmotors (M1), der eine Resonanzfrequenz ($f_R$) besitzt und während jedes Arbeitsschrittes mit einer Anregungsfrequenz ($f_E$) elektrisch gespeist wird, wobei das Verfahren dadurch gekennzeichnet ist, daß es eine Steuerphase umfaßt, die sich wenigstens über mehrere aufeinanderfolgende Schritte des Motors erstreckt und in der für einen momentanen Schritt des Motors ein bestimmter Wert der Anregungsfrequenz ($f_{E+1}$) verwendet wird, die Dauer ($t_{E+1}$) des momentanen Schrittes gemessen wird, die Dauer ($t_{E+1}$) mit der Dauer ($t_E$) des vorhergehenden Schrittes verglichen wird und je nach Ergebnis dieses Vergleichs der Wert der Anregungsfrequenz ($f_{E+2}$) für den folgenden Schritt in einer Richtung korrigiert wird, daß die Schrittdauer reduziert wird.

2. Verfahren nach Anspruch 1, dadurch gekennzeichnet, daß die Korrektur darin besteht, dem Wert der Anregungsfrequenz ($f_{E+1}$) ein vorgegebenes Inkrement (Delf), das positiv oder negativ sein kann, hinzuzufügen.

3. Verfahren nach Anspruch 2, dadurch gekennzeichnet, daß das Vorzeichen des Inkrements (Delf) geändert wird, wenn der Vergleich angibt, daß die Dauer ($t_{E+1}$) des momentanen Schrittes größer als jene ($t_E$) des vorhergehenden Schrittes ist.

4. Verfahren nach Anspruch 2, dadurch gekennzeichnet, daß dem Inkrement ein negativer Wert gegeben wird, wenn für einen Anfangsschritt der Steuerphase der bestimmte Wert der Anregungsfrequenz ($f_{E+1}$) größer als die Resonanzfrequenz ($f_R$) ist.

5. Verfahren nach einem der vorhergehenden Ansprüche, dadurch gekennzeichnet, daß es vor der Steuerphase eine Initialisierungsphase umfaßt, die sich über mehrere aufeinanderfolgende Schritte des Motors erstreckt und in der der bestimmte Wert der Anregungsfrequenz definiert wird, der am Beginn der Steuerphase zu verwenden ist.

6. Verfahren nach Anspruch 5, dadurch gekennzeichnet, daß in der Initialisierungsphase ein Anregungsfrequenzbereich zwischen zwei Grenzwerten (fmin, fmax) betrachtet wird, daß ein erster der Grenzwerte der Anregungsfrequenz ($f_E$) verwendet wird, um einen ersten Schritt des Motors zu erzeugen, daß die Dauer ($t_E$) dieses Schrittes gemessen wird und daß, falls sie kleiner als eine maximale Grenzdauer ($t_0$) ist, zur Steuerphase übergegangen wird, während andernfalls die Anregungsfrequenz ($f_E$) in Richtung zum anderen Grenzwert korrigiert wird und die so korrigierte Anregungsfrequenz ($f_{E+i}$) verwendet wird, um einen zweiten Schritt des Motors zu erzeugen, usw., bis die Schrittdauer ($t_{E+i}$) kleiner als die maximale Grenzdauer ($t_0$) ist.

7. Schaltung zum Anregen und Steuern eines piezoelektrischen Schrittmotors (M1), die für die Ausführung des Verfahrens nach einem der vorhergehenden Ansprüche geeignet ist, dadurch gekennzeichnet, daß die Schaltung umfaßt:

   - einen programmierbaren Oszillator (17), der so beschaffen ist, daß er ein Signal mit einstellbarer Frequenz ($f_E$) an eine Versorgungsschaltung (3) des Motors (M1) liefert,
   - Mittel (13, 14) zum Messen und Speichern der Dauer ($t_{E+1}$) eines Schrittes des Motors,
   - Mittel (18) zum Vergleichen der Dauer ($t_{E+1}$) mit der Dauer ($t_E$) eines vorhergehenden Schrittes und/oder mit einer vorgegebenen Grenzdauer ($t_0$) und
   - Einstellmittel (15, 16), die auf den programmierbaren Oszillator (17) als Antwort auf die Vergleichsmittel (18) einwirken, um das Signal mit einstellbarer Frequenz ($f_E$) zu modifizieren.

8. Schaltung nach Anspruch 7, dadurch gekennzeichnet, daß die Einstellmittel (15, 16) so beschaffen sind, daß sie das Signal mit einstellbarer Frequenz ($f_E$) durch Inkrementieren modifizieren.

9. Schaltung nach Anspruch 7 oder 8, dadurch gekennzeichnet, daß die Mittel (13, 14) zum Messen und Speichern einen Zähler (13) umfassen, dem ein Signalspeicherregister (14) zugeordnet ist.

10. Schaltung nach einem der Ansprüche 7, 8 oder 9, dadurch gekennzeichnet, daß die Schaltung außerdem Mittel (11) enthält zum Steuern des Betriebs der Mittel (13, 14) zum Messen und Speichern infolge des Empfangs eines Impulses, der von Erfassungsmitteln (50, 57) des Motors erzeugt wird, wenn dieser letztere einen Schritt ausgeführt hat.

**Claims**

1. Method for exciting and monitoring a piezoelectric motor (M1) in stepping mode, the motor having a resonance frequency ($f_R$) and being electrically supplied at an excitation frequency ($f_E$) during each operating step, the method being characterized in that it comprises a monitoring phase which extends at least over several successive steps of said motor and wherein, for a present step of said motor, a determined value of the excitation frequency ($f_E$+1) is used, the duration ($t_E$+1) of the present step is measured, said duration ($t_E$+1) is compared to the duration ($t_E$) of the preceding step and, according to the result of such comparison, said excitation frequency value ($f_E$+2) is corrected for the following step in a direction tending to reduce the duration of the step.

2. Method according to claim 1, characterized in that said correction consists of adding to said excitation frequency value ($f_E$+1) a predetermined increment (Delf) capable of being positive or negative.

3. Method according to claim 2, characterized in that if the comparison indicates that the duration of the present step ($t_E$+1) is greater than that of the preceding step ($t_E$), the increment sign (Delf) is changed.

4. Method according to claim 2, characterized in that a negative value is given to said increment if, for an initial step of the monitoring phase, said determined excitation frequency value ($f_E$+1) is greater than the resonance frequency ($f_R$).

5. Method according to any one of the preceding claims, characterized in that it comprises, prior to the monitoring phase, an initialisation phase which extends over several successive steps of the motor and wherein the determined excitation frequency value to be used is defined at the beginning of the monitoring phase.

6. Method according to claim 5, characterised in that in the initialisation phase, a range of excitation frequencies between two limit values (fmin, fmax) is considered, a first of the excitation frequency limit values ($f_E$) is used for producing a first step of the motor, the duration ($t_E$) of this step is measured and, if it is less than a maximum limit duration ($t_0$) one passes to the monitoring phase, if not the excitation frequency ($f_E$) is corrected in the direction of the other limit value and the excitation frequency thus corrected ($f_E$+$_i$) is used for producing a second step of the motor, and so on until the duration of the step ($t_E$+$_i$) is less than said maximum limit duration ($t_0$).

7. Excitation and monitoring circuit of a piezoelectric motor (M1) in stepping mode suitable for implementation of the method according to any of the preceding claims, characterized in that said circuit comprises:

- a programmable oscillator (17) arranged to supply an adjustable frequency signal ($f_E$) to a motor (M1) supply circuit (3);
- means (13, 14) for measuring and storing the duration ($t_E$+1) of a step of the motor;
- means (18) for comparing said duration ($t_E$+1) to the duration ($t_E$) of a preceding step and/or to a predetermined limit duration ($t_0$), and
- adjusting means (15, 16) acting on the programmable oscillator (17) in response to said comparing means (18), to modify said adjustable frequency signal ($f_E$).

8. Circuit according to claim 7, characterized in that said adjusting means (15, 16) are arranged for modifying by incremention said adjustable frequency signal ($f_E$).

9. Circuit according to claim 7 or 8, characterized in that said measuring and storage means (13, 14) comprise a counter (13) associated with a latch register (14).

10. Circuit according to any one of claims 7, 8 or 9, characterized in that the circuit also comprises means (11) for controlling the operation of said measuring and storing means (13, 14) following the reception of a pulse generated by detecting means (50, 57) of the motor when this latter has effected a step.

Fig . 1

EP 0 774 790 B1

# Fig .2

# Fig. 3

# Fig . 4

Fig. 5